Europäisches Patentamt

European Patent Office

Office européen des brevets

(19)

(11) **EP 0 863 843 B1**

(12) **EUROPEAN PATENT SPECIFICATION**

(45) Date of publication and mention
of the grant of the patent:
**17.07.2002 Bulletin 2002/29**

(51) Int Cl.[7]: **C01B 21/40**, C01B 21/38

(21) Application number: **96942097.5**

(86) International application number:
**PCT/US96/19076**

(22) Date of filing: **27.11.1996**

(87) International publication number:
**WO 97/19892 (05.06.1997 Gazette 1997/24)**

(54) **NITRIC ACID PRODUCTION AND RECYCLE**

VERFAHREN ZUR HERSTELLUNG UND WIEDERVERWENDUNG VON SALPETERSÄURE

PRODUCTION ET RECYCLAGE DE L'ACIDE NITRIQUE

(84) Designated Contracting States:
**AT BE CH DE DK ES FI FR GB GR IE IT LI LU MC NL PT SE**

(30) Priority: **01.12.1995 US 7833 P**

(43) Date of publication of application:
**16.09.1998 Bulletin 1998/38**

(73) Proprietor: **Drinkard Metalox, Inc.
Charlotte, NC 28205 (US)**

(72) Inventor: **DRINKARD, William, F., Jr.
Charlotte, NC 28204 (US)**

(74) Representative: **Schoppe, Fritz, Dipl.-Ing.
Schoppe, Zimmermann & Stöckeler
Patentanwälte
Postfach 71 08 67
81458 München (DE)**

(56) References cited:
**US-A- 3 991 167       US-A- 4 081 518
US-A- 4 419 333       US-A- 4 562 052
US-A- 5 017 348       US-A- 5 064 625**

**Description**

**FIELD OF THE INVENTION**

The present invention relates to a method for breaking the NO to $NO_2$ cycle in the production of nitric acid and the recovery of nitric oxide, and more particularly to apparatus and methods for the recycle of $NO_x$ gas, recovery and the production of nitric acid.

**BACKGROUND OF THE INVENTION**

The mathematically infinite cycle of gas phase oxidation of nitric oxide (NO) to nitric dioxide ($NO_2$) has dominated nitric acid production and the recovery of nitric oxide.

The nitric oxide to nitric dioxide cycle, which has been the limiting reaction for all nitric acid processes since processes based upon the catalytic oxidation of ammonia began, is described in the following equations:

$$(1) \quad 4NH_3(g) + 5O_2(g) \rightarrow 4NO(g) + 6H_2O(g)$$

$$(2) \quad 2NO(g) + O_2(g) \rightarrow 2NO_2(g)$$

$$(3) \quad 3NO_2(g) + H_2O(l) \rightarrow 2HNO_3(l) + NO(g)$$

Equations (2) and (3) describe the cycle eliminated by the present invention. As can be seen from equations (2) and (3), the reaction of every three moles of $NO_2$ with water to form two moles of nitric acid return one of the three moles of oxidized nitrogen as NO. This, of course, requires a reoxidation of the NO with an additional $O_2$ from air or other source.

Mathematically, one-third of the oxidized nitrogen has to be reoxidized with oxygen every time that two-thirds are reacted with water to form nitric acid.

The economic and environmental problems created by the currently practiced gas phase oxidation of nitric oxide (NO) have dominated and shaped the nitric acid industry since its inception in 1908 when Professor Ostwald piloted the first production of nitric acid based on the catalytic oxidation of ammonia ($NH_3$) to nitric oxide (NO).

There are three variables controlling the gas-phase oxidation or reoxidation of NO to $NO_2$, Eq. (2). They are:

    a. NO concentration vs. $O_2$ concentration;
    b. Temperature: the reaction time decreases with lower temperatures;
    c. Pressure: the need to achieve a termolar reaction requiring two molecules of NO and one molecule of $O_2$ decreases the time required for the oxidation of NO with $O_2$ to the third power of the pressure in which the reaction occurs.

This has resulted in the industry's development and use of expensive high pressure plants.

As currently practiced, these reactions require the return of one-third of the nitric dioxide to the gas phase as nitric oxide (NO), Eq. (3), which then re-requires the termolar reaction to nitric dioxide ($NO_2$), Eq. (2), and then an additional liquid phase reaction to convert two-thirds of this $NO_2$ to nitric acid ($HNO_3$), with one-third of the entering $NO_2$ again being returned to the gas phase as NO for an additional gas phase reaction, and so on.

This currently used series of reactions is an exercise in commercially striving to reach infinity. Of course, in the current practice of the art of nitric acid manufacture, economics dictate that at some point in this infinite series of reactions, whenever enough of the nitric oxides have been converted to nitric acid so that their further recycle adversely affects the economies of the further recycle process, they are wasted. This results in atmospheric discharge of $NO_x$.

In US 3,991,167, Depommier et al. of the firm Produits Chimiques Ugine Kuhlmann point out that current nitric acid from ammonia produces exhaust gases containing from 1,000 to 2,000 $cm^3$ of nitrogen oxides per cubic meter of effluent while recent legislation seeks to impose a limit of about 200 $cm^3$ of nitrogen oxides per cubic meter of tail gases.

They further add that the progressive process, Equation (3), previously described makes it "extremely difficult to absorb the last traces of nitrogen oxides in the absorption system conventionally used in manufacturing nitric acid" (column 1, lines 61-63).

    Attempts to lower the amounts of released nitrogen oxides by mere extension of the absorption system are fraught with difficult technical problems. Also, the additional installations would entail considerably increased investments. (Column 2, lines 1-6).

Depommier continues (Column 2, lines 15-48) to outline many of the difficulties existing with current nitric oxide emission control processes.

Typical discharge rates from such plants are about 3.9 MT (metric ton) of gases being discharged per each MT of 100% $HNO_3$ produced. The discharged gases contain a typical concentration of 0.02% to 0.20% $NO_x$.

With worldwide nitric acid production for 1985 estimated at greater than 30 million MT per year, this represents an atmospheric discharge of 23,400 to 234,000 MT of $NO_x$ per year.

Because of environmental regulations and the fact that such discharges are often marked with a disturbing reddish-brown color, most nitric acid plant discharges in the U.S.A. and in other environmentally conscious parts of the world are being treated either to obscure the discharge or to react the discharged $NO_x$ into another chemical form.

Earlier, the most common treatment was catalytic reaction with excess natural gas which served to reduce, dilute, and disperse the discharged nitric oxides, which made the reddish-brown fume invisible and added unreacted natural gas to the atmosphere.

Current technology is an expensive add-on consisting of ammonia gas, which is added in excess and catalytically reacted with the $NO_x$ to form nitrogen and ammonium nitrate, which is kept at a sufficiently high temperature to prevent a visible white fume of ammonia nitrate, as it is being discharged into the atmosphere. An excess of ammonia is usually required for this reaction which also discharges chemicals into the atmosphere.

In addition to the above economic and environmental losses caused by the nitrogen dioxide to nitric oxide cycle, there is also the economic burden caused by Eq. (2) in which two moles of NO are required to contact one mole of oxygen in order to form two moles of $NO_2$. This also is repeated again and again by the cycle.

In applying Eq. (2) to obtain a sufficiently close contact to effect a reasonably economic rate of molecular reactions between nitric oxide and oxygen, plants are now designed and operated at elevated pressures. The attainment of these pressures requires expensive turbo compressor sets and expensive high pressure stainless steel construction of all equipment under pressure.

Freitag and E. Scheibler, who are experts from the Uhde Co., one of the largest and the oldest suppliers of nitric acid plants and processes in the world, state in Handbook of Chemical Production Processes, Robert A. Meyers, editor, p. 3.6-24, 1986, under their description of "Uhde Nitric Acid Processes" that such turbo compressor sets represent 25-30% of the total cost of a conventional nitric acid plant.

The elevated pressures used to increase the reaction rate also causes greater losses of the expensive platinum catalyst and lower efficiencies in ammonia oxidation and conversion to nitric acid.

Typical Performance Figures for NH, Combustion, provided by W. Freitag and E. Scheibler, in their report on Uhde Nitric Acid Processes, previously mentioned, give platinum catalyst consumption at 55 mg/MT $HNO_3$ produced at one atmosphere pressure (0.1 MPa abs.) and 280 mg/MT $HNO_3$ produced at ten atmospheres of pressure (1.0 MPa abs.). Some of this platinum can be recovered in downstream filters but in all cases platinum costs are substantially higher at the higher operating pressures which are used in current nitric acid production.

Ammonia conversion to nitric oxide and subsequently to nitric acid suffers also. In the reference cited above, the conversion of ammonia to nitric oxide $(NH_3 \rightarrow NO)$ percent drops from 97.5% at 0.1 MPa abs. to 94.0% at 1.0 MPa abs., a loss of 3.5%.

Experts and theory teach that dissolved trivalent nitrogen dissolved in nitric acid cannot be practically oxidized by oxygen alone or in air to additional nitric acid.

This is cogently expressed by Bernard J. Lerner of the Beco Engineering Company in US Patent N' 5,017,348, column 4, lines 49-55:

The singular and consistent deficiency of the prior art discussed above is the failure to recognize that treating $HNO_2$ in solution with air or oxygen in an open system will remove from solution the very reactants, $HNO_2$ and NO, that require liquid-phase oxidation. This causes continuous, open-ended removal of NO from the solution, whether air or pure oxygen is used.

US-A-4,562,052 describes a process for the removal of nitrogen oxides from nitric acid plant tail gas. disclosed is a method of dissolving nitrogen oxides in a nitric acid solution, creating a concentrated $HNO_2/HNO_3$ solution, which is thereafter stripped to recover the original components of $H_2O$, NO and $HNO_3$. NO, nitric oxide, is simply converted into $HNO_2$ which is then reconverted back into NO, nitric oxide, with no net nitric acid production. $HNO_2$ is described as the intermediate product which is then stripped with air or other gases to recover nitric oxide gas and nitric acid. Hydrogen peroxide, $H_2O_2$, is required to convert $HNO_2$ into nitric acid, $HNO_3$.

US-A-4,419,333 describes a process for the removal of nitrogen oxides. It is disclosed that such amounts of NO and $NO_2$ are present in the off-gas after treatment, that further processing with hydrogen peroxide is necessary.

US-A-4,081,518 describes a gaseous product stream. The absorption of $NO_x$ components into a $HNO_3$ solution which is later scrubbed is disclosed, with the $NO_x$ components being sent back to a nitric acid production plant. The only mention made of $N_2O_3$ is as a possible gaseous component to be absorbed in $HNO_3$, and later desorbed from $HNO_3$.

US-A-5,017,348 describes the treatment of nitrogen oxides. $N_2O_3$ is not mentioned. The oxidized solution still contains concentrations of $HNO_2$ and NO, even if reduced from the original solution.

It is the object of the invention to provide an improved process for effectively and economically recycling $NO_x$ into nitric acid.

This object is achieved by a process according to claim 1.

It is an advantage of the present invention that a method is provided for breaking the mathematically infinite cycle of gas phase oxidation of nitric oxide (NO) to nitric dioxide $(NO_2)$.

It is an advantage of the present invention that a method is provided for the recovery of nitric acid without the evolution of the gaseous nitrogen oxides to the environment.

It is an advantage of the present invention that a method is provided for increasing the concentration of nitric acid without the need for evaporation.

It is an advantage of the present invention that a method is provided for forming a trivalent nitrogen in solution which can be rapidly reacted with gaseous oxygen.

It is an advantage of the present invention that a method is provided for the economical production and manufacture of nitric acid at atmospheric pressure while reducing or eliminating harmful environmental emissions.

The invention provides a method for rapidly removing nitric oxide (NO) from the gas phase by reaction with catalyzed nitric acid. The reaction forms nitric trioxide ($N_2O_3$) in solution.

$$4NO(g) + 2HNO_3(aq) \rightarrow 3N_2O_3(aq) + H_2O$$

The homogeneous catalyst required is dissolved nitrite ($NO_2^-$) ion. When nitrite ion is present, the reaction is both rapid and quantitative.

Although most texts on nitric acids and nitric oxides state that $N_2O_3$ is rare or difficult to form, the present invention produces it rapidly and at such high concentrations that, if desired, one can form a concentrated dark blue, ink-like solution of $N_2O_3$ in nitric acid and water.

The other part of the present invention which breaks the NO to $NO_2$ gas phase cycle is the discovery that, in the above solution, one can achieve rapid, quantitative oxidation of the $N_2O_3$ in the liquid phase rather than the conventional gas phase.

$$(4) \qquad N_2O_3(aq) + O_2(g) + H_2O \rightarrow 2HNO_3(aq)$$

Unlike current practice, there is no return of NO or $NO_2$ back to the gas phase. The cycle is broken.

It is the ability of the present invention to obtain high $N_2O_3$ in solution and effect a rapid liquid phase reaction of $N_2O_3$ with $O_2$, that allows the process to be operated so that $O_2$ entering the $N_2O_3$ aqueous solution is completely reacted, so that no $O_2$ (g) escapes the liquid surface.

Absorption and reaction rates are so efficient and rapid that the process can be effected with equipment as simple as a spray or inductor to capture the NO, with subsequent or cocurrent dispersion of $O_2$ gas into the resulting liquid, resulting in nitric acid from NO, $O_2$, and $H_2O$.

The expensive pressure and multi-mass-transfer equipment, such as absorption columns, packed towers, bubble caps, etc. that is currently required for nitric acid production and nitric oxide recovery, is not required when practicing this invention.

## DETAILED DESCRIPTION

Part of the invention is the discovery that one can rapidly remove nitric oxide (NO) from the gas phase by reaction with catalyzed nitric acid. The reaction forms trivalent nitrogen in solution.

$$4NO(g) + 2HNO_3(aq) \rightarrow 3N_2O_3(aq) + H_2O$$

The homogeneous catalyst is dissolved trivalent nitrogen ($NO_2^-$) ion. When sufficient trivalent ion is present, the reaction is both rapid and quantitative.

Although most texts on nitric and nitric oxides state that $N_2O_3$ is rare or difficult to form, the present invention produces it rapidly and at such high concentrations that, if desired, one can form a dark blue, ink-like solution of $N_2O_3$ in nitric acid and water.

The other part of the present invention which breaks the NO to $NO_2$ gas phase cycle is the discovery that in the above solution, one can achieve rapid, quantitative oxidation of the $N_2O_3$ in the liquid phase with dissolved oxygen rather than the conventional gas phase.

$$(4) \qquad N_2O_3 + O_2 + H_2O \rightarrow 2HNO_3$$

The maintenance of excess to stoichiometric trivalent nitrogen oxides in solution allows rapid oxygen addition with no need to release oxygen into the gas phase.

Unlike current practice, there is no return of NO or $NO_2$ back to the gas phase. The cycle is broken.

It is the present invention's ability to obtain high $N_2O_3$ in solution and effect a rapid liquid phase reaction of $N_2O_3$ with $O_2$. The reaction allows the process to be operated so that no $O_2$ enters the gas phase and none is required in the gas phase.

As is apparent, the continued supply of $NO_x$ (NO + $NO_2$) into the scrubbing nitric acid and its oxidation to additional nitric acid raised the concentration of the combined nitric acids.

Absorption and reaction rates are so efficient and rapid that the process can be effected with equipment as simple as a spray or inductor to capture the NO, followed by dispersion of $O_2$ gas into the resulting liquid, resulting in nitric acid from NO, $O_2$, and $H_2O$.

The expensive pressure and multi-mass-transfer equipment, such as absorption columns, packed towers, bubble caps, etc. that is currently required for nitric acid production and nitric oxide recovery, is not required when practicing this invention. Of course, absorption columns, packed towers, bubble caps, and other mass transit equipment can be used but when applied using the present invention, they can significantly be reduced in both cost and complexity.

The invention is a process which consists of the following steps:

1) Establishment and maintenance of a proper dissolved $N_2O_3/NO_2^-$ level in a nitric acid scrubbing solution.

NO Option:    1.0 to 20.0 g/l as reacted NO
NO Range:    0.1 to 40.0 g/l as reacted NO

$HNO_3$ Option:    15 to 55% $HNO_3$
$HNO_3$ Range:    5 to 65% $HNO_3$

2) Removal of NO from gas phase by reaction with $HNO_3$.

3) Maintenance of NO in optimum range by reaction with $O_2$.

$$N_2O_3 + O_2 + H_2O \rightarrow 2\ HNO_3$$

If the $N_2O_3$ (dissolved NO) is maintained in the optimum range, the reaction of NO with $HNO_3$ is rapid and quantitative and only a single or at most several mass transfer stages are required. The same is true of the $O_2$ reaction.

When practiced as described, NO gas is immediately and quantitatively reacted into the liquid phase. The resulting solution is maintained with an excess of reacted NO.

[0059]    When oxygen contacts this solution, it is immediately and quantitatively reacted with the dissolved nitric oxide (NO) to form nitric acid ($HNO_3$). As practiced, no $O_2$ (g) entering the $N_2O_3$ solution is discharged from the solution into the gas phase. The ultimate oxidation of NO to $HNO_3$ totally occurs in the liquid phase.

If $NO_2$ is present either from the process which is evolving the $NO_x$ or by gas phase oxidation where oxygen is present in the gases being supplied to the present invention, it is converted to $HNO_3$ and NO by the water present in the scrubbing $HNO_3/NO_2$ solution as in Eq. (3). The resulting NO is reacted with the nitric and is oxidized in the liquid phase by the oxygen supplied. If desired, oxygen can be withheld and the resulting $N_2O_3/HNO_3$ solution can be stored or transferred to another site for oxidation to nitric acid at any convenient time.

## ALTERNATIVE EMBODIMENTS

Alternatively this process for generating nitric acid ($HNO_3$) can be described as comprising the steps of: one, reacting a +2 oxidation gaseous nitrogen (NO), as shown in Table 1, with a +5 oxidation nitrogen in solution ($HNO_3$) to obtain a +3 oxidation nitrogen in solution ($N_2O_3$); and two, reacting the +3 oxidation nitrogen ($N_2O_3$), in the solution, with oxygen ($O_2$) and water ($H_2O$) to produce a +5 oxidation nitrogen ($HNO_3$) while maintaining a level of a +3 oxidation nitrogen ($N_2O_3$) in excess of added oxygen ($O_2$). The oxidation state also can be referred to as the valence state.

Table 1

| OXIDATION | STATES OF NITROGEN |
|---|---|
| +6 | $NO_3$, Nitrogen trioxide |
| +5 | $N_2O_5$, $HNO_3$, Nitrates |
| +4 | $NO_2$, Nitrogen dioxide, $N_2O_4$ |
| +3 | $N_2O_3$, $HNO_2$, Nitrite |
| +2 | NO, Nitric oxide |
| +1 | $N_2O$, Nitrous oxide |
| 0 | $N_2$, Nitrogen |

## EXAMPLES

Apparatus is set up with a source of nitric oxides and two or three nitric absorption vessels consisting of one-liter reactors containing nitric acid containing trivalent nitrogen.

The scrubbing or reactant nitric acid is continuously circulated through a laboratory inductor. This supplies the energy required to circulate the nitric oxides through the vessels.

The vessels are connected in a continuous loop.

## EXAMPLE 1

An excess of arsenic trioxide ($As_2O_3$) is added to 4.536 Kg of 50% nitric acid $HNO_3$. The resulting nitric oxide (NO) is drawn through three spray scrubbers, the spray being a trivalent nitrogen containing solution of 20% $HNO_3$.

As the trivalent nitrogen content of the scrubbing nitric builds from its initial level of 3.2 g/l expressed as NO, gaseous oxygen is reacted with the scrubbing solution by adding it directly to the scrubbing solution.

Oxygen addition is adjusted so as to maintain an excess of trivalent nitrogen in solution. No oxygen escapes into the head space.

As this cycle continues, the collected and oxidized nitric oxide increases the concentration of the scrubbing nitric.

Recovered nitric is 2.268 Kg as 100% $HNO_3$ or 99.17% of the supplied NO has been converted to nitric acid by the invention. The addition of this 2.268 Kg to the initial scrubbing nitric raises its concentration to 47.8%.

## EXAMPLE 2

A gaseous mixture of $NO_x$ with stoichiometric oxygen was passed through two reactors as described above.

The total amount of nitric oxides fed into the system was 63.86 grams expressed as nitric acid.

Essentially full recovery of the nitric oxide recovered as nitric acid was achieved.

In the first absorber, 97.8% of the nitric oxide was recovered and 2.2% was recovered in the second absorber.

## SUMMARY OF THE ACHIEVEMENT OF THE OBJECTS OF THE INVENTION

From the foregoing, it is readily apparent that I have invented an improved method that is both environmentally and economically effective for nitric acid production and for recycling $NO_x$ into nitric acid. This method breaks the mathematically infinite cycle of gas phase oxidation of nitric oxide (NO) to nitric dioxide ($NO_2$) and back to nitric oxide when nitric dioxide ($NO_2$) is reacted with water to nitric acid. Further, this invention provides a process for the recovery and production of nitric acid without the evolution of the gaseous nitrogen oxides into the environment.

It is to be understood that the foregoing description and specific embodiments are merely illustrative of the best mode of the invention and the principles thereof, and that various modifications and additions may be made to the apparatus by those skilled in the art, without departing from the scope of this invention.

## Claims

1. A process for producing nitric acid or of recovering nitric oxide comprising the steps of:

   reacting nitric oxide (NO) with nitric acid ($HNO_3$) in aqueous solution to form $N_2O_3$ in aqueous solution; and

   oxidizing the $N_2O_3$ with oxygen in aqueous solution to form nitric acid ($HNO_3$).

   wherein the $N_2O_3$ has a concentration maintained between 0.1 to 40.0 g/l.

2. The process according to claim 1 wherein the oxygen is gaseous.

3. The process according to claim 1 wherein the nitric acid concentration is maintained from 5 to 65% nitric acid.

4. The process according to claim 1 wherein the formation of $N_2O_3$ occurs in the presence of an $NO_2^-$ catalyst.

5. The process according to claim 1 wherein the nitric oxide (NO) derives from a source of $NO_x$.

6. The process according to claim 5 wherein said

source of $NO_x$ is comprised mostly of NO.

7. The process according to claim 5 wherein said $NO_x$ is in a gaseous state.

8. The process according to claim 5 wherein said $HNO_3$ is in an aqueous state.

9. The process according to claim 5 wherein the concentration of said $HNO_3$ ranges from 5% to 65%.

10. The process according to claim 5 wherein said $NO_2^-$ is in aqueous solution.

11. The process according to claim 5 wherein said source of $NO_x$ derives from the reaction of a first portion of $HNO_3$(aq) with a compound, said NO then reacted with a second portion of $HNO_3$(aq).

12. The process according to claim 11 wherein said source of $NO_x$ is comprised mostly of NO.

13. The process according to claim 11 wherein the concentration of said $HNO_3$(aq) ranged from 5% to 65%.

14. The process according to claim 11 further comprising maintaining trivalent nitrogen in aqueous solution while the reaction is occurring.

15. The process according to claim 11 further comprising the step of providing a $NO_2^-$ catalyst when reacting NO with $HNO_3$.

16. The process according to claim 11 wherein $NO_2$ from said source of $NO_x$ is reacted with $H_2O$ to produce $HNO_3$ and NO.

17. The process according to claim 1, 5, or 11 wherein the $N_2O_3$ is oxidized in the liquid phase.

## Patentansprüche

1. Ein Verfahren für das Erzeugen von Salpetersäure oder das Wiedergewinnen von Stickoxid, das folgende Schritte aufweist:

   Reagierenlassen von Stickoxid (NO) mit Salpetersäure ($HNO_3$) in einer wässrigen Lösung, um $N_2O_3$ in einer wässrigen Lösung zu bilden; und

   Oxidieren des $N_2O_3$ mit Sauerstoff in einer wässrigen Lösung, um Salpetersäure zu bilden ($HNO_3$).

   wobei das $N_2O_3$ eine Konzentration aufweist, die zwischen 0,1 bis 40,0 g/l beibehalten wird.

2. Das Verfahren gemäß Anspruch 1, bei dem der Sauerstoff gasförmig ist.

3. Das Verfahren gemäß Anspruch 1, bei dem die Salpetersäurekonzentration von 5 bis 65 % Salpetersäure beibehalten wird.

4. Das Verfahren gemäß Anspruch 1, bei dem die Bildung von $N_2O_3$ bei dem Vorhandensein eines $NO_2^-$-Katalysators auftritt.

5. Das Verfahren gemäß Anspruch 1, bei dem das Stickoxid (NO) von einer Quelle aus $NO_x$ hergeleitet wird.

6. Das Verfahren gemäß Anspruch 5, bei dem die Quelle aus $NO_x$ hauptsächlich aus NO gebildet ist.

7. Das Verfahren gemäß Anspruch 5, bei dem das $NO_x$ in einem gasförmigen Zustand ist.

8. Das Verfahren gemäß Anspruch 5, bei dem das $HNO_3$ in einem wässrigen Zustand ist.

9. Das Verfahren gemäß Anspruch 5, bei dem die Konzentration des $HNO_3$ von 5 % bis 65 % reicht.

10. Das Verfahren gemäß Anspruch 5, bei dem das $NO_2^-$ in einer wässrigen Lösung ist.

11. Das Verfahren gemäß Anspruch 5, bei dem die Quelle von $NO_x$ von der Reaktion von einem ersten Teil von $HNO_3$ (aq) mit einer Verbindung hergeleitet wird, wobei NO dann mit einem zweiten Teil von $HNO_3$ (aq) reagiert.

12. Das Verfahren gemäß Anspruch 11, bei dem die Quelle von $NO_x$ überwiegend aus NO gebildet ist.

13. Das Verfahren gemäß Anspruch 11, bei dem die Konzentration des $HNO_3$ (aq) von 5 % bis 65 % reicht.

14. Das Verfahren gemäß Anspruch 11, das ferner das Beibehalten eines dreiwertigen Stickstoffs in wässriger Lösung aufweist, während die Reaktion auftritt.

15. Das Verfahren gemäß Anspruch 11, der ferner den Schritt des Lieferns eines $NO_2^-$-Katalysators bei der Reaktion von NO mit $HNO_3$ aufweist.

16. Das Verfahren gemäß Anspruch 11, bei dem $NO_2$ von der Quelle aus $NO_x$ mit $H_2O$ reagiert, um $HNO_3$ und NO zu erzeugen.

17. Das Verfahren gemäß Anspruch 1, 5 oder 11, bei dem das $N_2O_3$ in der Flüssigphase oxidiert wird.

**Revendications**

1. Un procédé de production d'acide nitrique ou de récupération d'oxyde nitrique comprenant les étapes consistant à :

faire réagir de l'oxyde nitrique (NO) avec de l'acide nitrique ($HNO_3$) dans une solution aqueuse afin de former du $N_2O_3$ en solution aqueuse ; et

oxyder le $N_2O_3$ avec de l'oxygène en solution aqueuse afin de former de l'acide nitrique ($HNO_3$) ;

où le $N_2O_3$ présente une concentration maintenue entre 0,1 et 40,0 g/l.

2. Le procédé selon la revendication 1 dans lequel l'oxygène est gazeux.

3. Le procédé selon la revendication 1 dans lequel la concentration d'acide nitrique est maintenue de 5 à 65% d'acide nitrique.

4. Le procédé selon la revendication 1 dans lequel la formation de $N_2O_3$ se produit en présence d'un catalyseur de $NO_2^-$.

5. Le procédé selon la revendication 1 dans lequel l'oxyde nitrique (NO) dérive d'une source de $NO_x$.

6. Le procédé selon la revendication 5 dans lequel ladite source de $NO_x$ est composée principalement de NO.

7. Le procédé selon la revendication 5 dans lequel ledit $NO_x$ est dans un état gazeux.

8. Le procédé selon la revendication 5 dans lequel ledit $HNO_3$ est dans un état gazeux.

9. Le procédé selon la revendication 5 dans lequel la concentration dudit $HNO_3$ est dans la gamme de 5% à 65%.

10. Le procédé selon la revendication 5 dans lequel ledit $NO_2^-$ est en solution aqueuse.

11. Le procédé selon la revendication 5 dans lequel ladite source de $NO_x$ dérive de la réaction d'une première partie de $HNO_3$(aq) avec un composé, ledit NO étant ensuite amené à réagir avec une seconde partie de $HNO_3$(aq).

**12.** Le procédé selon la revendication 1 dans lequel ladite source de $NO_x$ est composée principalement de NO.

**13.** Le procédé selon la revendication 11 dans lequel la concentration dudit $HNO_3(aq)$ est dans la gamme de 5% à 65%.

**14.** Le procédé selon la revendication 11 comprenant en outre le fait de maintenir de l'azote trivalent en solution aqueuse pendant que la réaction se produit.

**15.** Le procédé selon la revendication 11 comprenant en outre l'étape consistant à prévoir un catalyseur de $NO_2^-$ lors de la réaction de NO avec $HNO_3$.

**16.** Le procédé selon la revendication 11 dans lequel du $NO_2$ provenant de ladite source de $NO_x$ est amené à réagir avec $H_2O$ pour produire du $HNO_3$ et du NO.

**17.** Le procédé selon la revendication 1, 5 ou 11 dans lequel le $N_2O_3$ est oxydé en phase liquide.